# DEMANDE DE BREVET EUROPEEN

(11) **EP 0 695 667 A1**
(43) Date de publication de la demande: **07.02.1996**
(21) Numéro de dépôt: 95410081.4
(22) Date de dépôt: 03.08.1995
(51) Int. Cl.: B60Q 1/44

(54) **Dispositif de sécurité entièrement électronique permettant la modulation d'intensité ou de cadencement des feux STOP des véhicules automobiles ou motocycles**

(30) Priorité: 04.08.1994 FR 9409873
(71) Demandeur: Loisel, Yves, F-73110 La Rochette (FR)
(72) Inventeur: Loisel, Yves, F-73110 La Rochette (FR)

(57) **Abrégé**

L'invention présente consiste à utiliser un capteur piézo résistif intégré du type TSA 150 capable d'analyser instantanément l'accélération d'un véhicule, de traduire celle-ci en permanence grâce à une centrale de gestion et ainsi permettre de faire varier l'intensité et le cadencement des feux arrières stop en fonction des critères définis par le constructeur.

## Description

L'invention concerne un dispositif de commande entièrement électronique des feux stop des véhicules automobiles et motocycles.
Les véhicules tant automobiles que motocycles sont en général équipés d'un feu stop qui s'allume lorsque le contacteur de la pédale ou poignée de frein est actionné.
Le contacteur est directement alimenté par la batterie et protégé par un fusible. Lorsque le contacteur est actionné, il établit le contact au niveau de l'ampoule du feu arrière qui s'allume.

Ce dispositif présente divers inconvénients :
il ne donne aucune information quand à l'accélération ou la décélération du véhicule, ni aucune information quand à l'intensité du freinage.
Ce qui empêche une anticipation dans la conduite de ceux qui suivent ledit véhicule. Il y a donc des risques non négligeables de carambolages surtout en circulation dense et rapide ce qui est de plus en plus le cas dans le monde actuellement.
Par ailleurs, l'intensité constante des feux stop peut se confondre avec les feux de brouillard et perturber la conduite.
Différents systèmes existants permettent d'attirer l'attention des véhicules suiveurs soit par adjonction de feux supplémentaires sur le pare-brise arrière soit de simples clignoteurs qui clignotent à chaque pression sur la pédale de frein.
D'autres systèmes constitués d'interrupteurs sont solidaires de la pédale ou poignée d'accélérateur et sont reliés à l'ampoule de feu stop. Ces systèmes mécaniques sont peu fiables et complexes à fabriquer et à installer.

Certains systèmes sont fondés sur l'utilisation de capteurs à mercure. Le mercure se déplaçant dans un tube peut établir au passage des contacts avec des circuits électriques. Ce système présente de grosses difficultés de mise en oeuvre sans compter une maintenance délicate et une fiabilité faible.

### Analyse du brevet n° 2638408 du 2 nov 88

Ce brevet décrit un éclairage clignotant plus ou moins vite en fonction de l'intensité de freinage. n est constitué d'un capteur d'accélération à inertie, comprenant une bille, un guide, un ou plusieurs capteurs optiques détectant le passage de la bille par une position donnée, et d'un système électronique de commande.
Il est cité dans ce brevet des solutions classiques d'amélioration de la signalisation de décélération tels que:
un ou plusieurs feux de stop suplémentaires sur le véhicule, enclenchement des feux de stop par un contacteur quand la pédale accélérateur revient à 0, enclenchement par l'aiguille du compteur de vitesse (?!).

*Tous ces systèmes ne sont pas très fiables dans le temps, complexe à installer*.
En ce qui concerne le capteur d'informations lui même, de nombreux systèmes existent dont le plus connu et le plus économique est un globule de mercure se déplacant le long d'un guide et fermant les contacts disposés le long de ce dernier (brevet français n° 2334111) difficile à mettre en oeuvre, oxydation des contacts et usure dans le temps.

### Analyse du brevet n°0440468 A2 du 31-01-91

Le concept global est le même, seul change le capteur d'infonnation, celui ci est constitué d'un capteur inductif (identique au capteur bobine de vitesse du calculateur) qui mesure directement la vitesse du véhicule, le point de mesure pouvant être à différents endroits tels que : sortie de boite à vitesse, cable compteur, arbre d'allumage, etc...

### Analyse du brevet n°WO 93/16899 du 20-02-92 (PCT)

Idem au précédent sauf que le capteur d'information est un capteur de pression qui vérfie la présence ou non de la pression exercée par le pied sur l'accélérateur.

### Analyse du brevet n°0380736 du 02-02-89 (allemand)

Idem mais il utilise un capteur d'accélération capacitif, ce capteur est basé sur le principe du condensateur:
En effet un condensateur n'est rien d'autre que 2 armatures avec un isolant au milieu (air).

On voit donc qu'en faisant varier la distance entre les 2 plaques on fait varier la capacité, il y a donc un système masse ressort qui fait varier la distance entre les deux plaques, en fonction de l'accélération.

Notre concept a l'avantage d'être d'une simplicité exemplaire, d'une fiabilité à toute épreuve d'une précision quasi absolue sans parler de son infinie modularitée.Le coût d'instalation est minimum et s'adapte aussi facilement en première ou deuxième monte.
Par ailleurs, il est aussi sensible aux accélérations qu'aux décélérations

Notre procédé consiste à utiliser un capteur électronique 1 de type piézo résistif, Texas Instrument à développé en 1987 à l'aide de sa technologie circuit intégré un micro module piézo résistif au silicium intégré dans un minuscule boitier de transistor.

*Rappel*: le phénomène piézo résistif se déroule de la manière suivante:
- Si l'on soumet un cristal particulier à une tension électrique, celui ci se déforme de manière proportionelle à la tension.
- Si l'on soumet aux bornes d'un cristal particulier une force, on récupère dans l'axe opposé une tension proportionelle à cette force.

C'est la deuxième propriété qui est utilisé dans notre cas, celle ci nous permet de récupérer directement aux bornes du circuit une tension continue directement proportionelle à l'accélération à laquelle il est soumis.
Une petite centrale de traitement 2 permet de traduire instantanément l'information tension donnée par le capteur électronique 1 en flux d'illumination au niveau des feux stop 3.
La centrale de traitement peut traduire la variation de tension du capteur 1 en illumination progressive proportionnelle à la décélération mais peut notamment aussi assurer un clignotement des feux stops de plus en plus rapide et de plus en plus fort.

### Exemple :

Le traitement du signal émis par le capteur 1 peut permettre de multiples applications depuis la mesure de la vitesse jusqu'à l'information instantanée de la perte d'adhérence du véhicule au sol.

Mais l'avantage qui nous semble primordial c'est que les feux stop peuvent s'allumer alors que le pilote n'a pas encore touché la pédale de frein, il y a anticipation, dès que le véhicule décélère les feux stop préviennent les véhicules suiveurs.

Il faut aussi insister sur l'extrême précision et l'extrême fiabilité du système.
Le système se monte en parallèle sur le réseau électrique d'alimentation des feux stop sans aucune modification de celui-ci ce qui permet en cas de défaillance de celui ci de se retrouver en circuit de base.

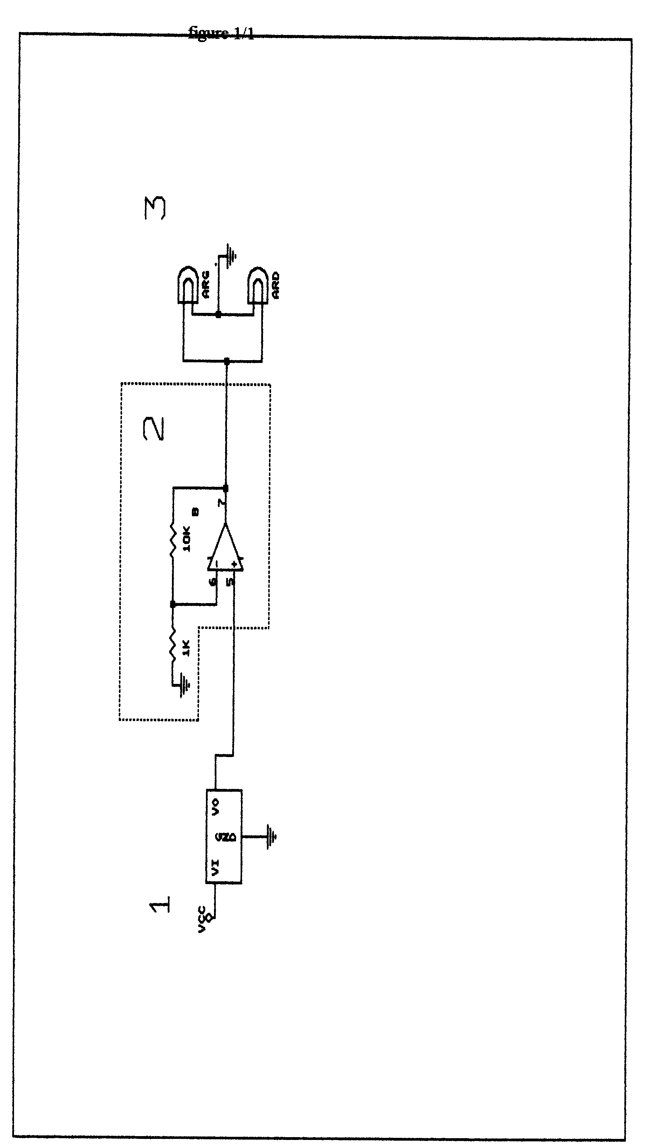

## Revendications

**1/**Dispositif de commande électronique des feux de stop des véhicules automobiles ou motocycles venant perfectionner le sygtème classique. Il permet en effet d'activer la mise en route du feu stop éventuellement avant même que le pilote n'ait eu le temps de freiner (rétrogradage), caractérisé en ce que le capteur 1 de type microélectronique donne en permanence une information en tension proportionelle à l'accélération ou à la décélération du véhicule. Cette information est continuellement traitée dans la centrale électronique de traitement 2 pour assurer l'illumination linéaire et/ou non linéaire, cadencée ou non des feux de stop en fonction de la décélération due au freinage.

**2/**Dispositif selon la revendication 1 caractérisé en ce que la centrale de traitement 2 analyse en permanence les informations du capteur 1.

**3/**Dispositif selon les revendications 1 et 2 caractérisé en ce que la centrale de traitement 2 peut analyser l'information reçue de 1 et les traduire en éléments directement utilisables par le conducteur du véhicule ou les conducteurs qui suivent le véhicule (indication de perte d'adhérence par exemple pour le conducteur et luminescence cadencée variable pour le suiveur).

**4/**Dispositif selon les revendications 1,2 et 3 caractérisé en ce que le capteur 1 et la centrale de traitement 2 sont en relations permanentes avec le réseau électrique qui alimente les feux de stop.

**5/**Dispositif selon les revendications 1,2,3 et 4 caractérisé en ce que le capteur 1 est un capteur d'accélération réalisé en technologie microélectronique.

**6/**Dispositif selon les revendications 1,2,3,4 et 5 caractérisé en ce que le capteur 1 permet une mesure précise et continue, de la valeur de l'accélération et non une simple détection de seuils.

**7/**Dispositif selon la revendication 4 caractérisé en ce que la centrale de traitement 2 peut être réalisé indifférement en électronique analogique et/ou numérique.
